# EUROPEAN PATENT APPLICATION

(11) **EP 1 961 657 A1**
(43) Date of publication of application: **27.08.2008**
(21) Application number: 07003651.2
(22) Date of filing: 22.02.2007
(51) Int. Cl.: B64C 27/00, B64C 13/16, B64C 13/50

(54) **Improved stabilization for flight platforms**

(71) Applicant: Steadicopter Ltd., 20692 Yoqneam (IL)
(72) Inventor: Segal, Tuvia, Haifa 34753 (IL)
(74) Representative: Zipse Habersack Kritzenberger

(57) **Abstract**

A flight platform (10), comprising a rotor (12) rotating about a rotor shaft (20) for providing the platform with an active driving force, and a flight control system that controls the flight based on measured flight parameters that are measured by sensors (30,32), wherein at least one of the sensors is located substantially along the axis of rotation of the rotor.

## Description

### FIELD OF THE INVENTION

The present invention relates to control and stabilization for unstable flight platforms.

### BACKGROUND OF THE INVENTION

Unstable Aerial Platforms (UAP), are in general small scale flying objects, which are designed for flying and performing a variety of civil, security and military missions. There are several approaches for designing a UAP. Most of the small scale platforms are based on a fixed wings flight platform which are mostly stable nature.
Currently, the market is looking for new VTOL (vertical takeoff and landing) platforms, mostly based on rotating wings platform such as a helicopter which are unstable by nature. A helicopter is an example of a UAP, with rotating wings. It flies using a rotary wing design, wherein the wings or blades rotate in a plane parallel to the longitudinal axis of the fuselage.

The basic building blocks required to build any UAP are: sensors, actuation mechanisms, structures, electronics and power sources. Many technical difficulties are involved in miniaturization of these components as well as confining their weight. But on-top of the technical challenge of building a UAP, exist the challenge of integrating all the building blocks into an efficient, controllable flight system. One of the most difficult tasks is maintaining the stabilization of a flight platform. This is especially difficult when a small-scale platform such as a UAP is considered.

Most fixed wing platforms are designed to maintain stability during flight and will keep their flight condition in all six axes with minimum pilot correction. However, unstable platforms, such as those with rotating wings (helicopters for example), cannot maintain their flight condition, and without active piloting they will roll over immediately, especially during critical tasks such as: takeoff, landing and hovering. Furthermore, unstable platforms are very sensitive to changes in their stabilization conditions, even small changes for very short periods of time in the output, or in an environmental factor such as wind shears, can cause an immediate unstable condition. This problem is exacerbated in small-scale unstable platforms.

For a successful flight, in unstable platforms, the platform must be capable of maintaining stability, while carrying out flight tasks such as: takeoff, hovering, flying in a defined route and landing. In order to maintain stability, a variety of input parameters need to be measured and processed in the control algorithms continuously in order to process the required outputs to the servos that are steering the platform. This is usually done by using sensors, which are placed on the flight platform. The measured parameters include for example: position, velocity, acceleration, or more specifically: altitude, vertical (z axis) climb and descent, velocity and acceleration, horizontal (x, y axis) position, velocity or acceleration.

To measure these parameters, required for stabilizing of a flight platform, sensors such as: clinometers, gyros, accelerometers are mechanically installed on the flight platform, to sense and measure all 6 axis movements (X,Y,Z linear and angular). However, during measurement other irrelevant movements are measured and added to the required movement values. This problem reduces the control system performance, and reduces the stabilization system performance as well as the overall platform flight performance. Thus, to improve flight and stabilization performance, it is usually required to eliminate and to subtract the irrelevant values from the relevant measurements. For example, for gyros and clinometers, which are used to measure angular movements, there is a need to cancel linear movements which are measured with the angular movement. For accelerometers, which are used to measure the linear movements only, it is required to cancel the angular movements, measured with the linear movement.

Although, the irrelevant movements, measured by the sensors, are usually removed from the sensors output, the necessity to filter these signals, adds to the systems complexity on one hand, and on the other hand it limits the sensors accuracy. The disclosed invention, offers a novel solution to this problem, thus providing a less complex more accurate system, which results in a more stable flight platform.

### SUMMARY OF THE INVENTION

There is thus provide, in accordance with some preferred embodiments of the present invention, a flight platform, comprising a rotor rotating about a rotor shaft for providing the platform with an active driving force, and a flight control system that controls the flight based on measured flight parameters that are measured by sensors, wherein at least one of the sensors are located substantially along the axis of rotation of the rotor.

Furthermore, in accordance with some preferred embodiments of the present invention, said at least one of the sensors is located substantially at the zero coordinates of the rotor.

Furthermore, in accordance with some preferred embodiments of the present invention, said at least one of the sensors is located above the zero coordinates of the rotor.

Furthermore, in accordance with some preferred embodiments of the present invention, the flight platform is an unmanned flight platform.

Furthermore, in accordance with some preferred embodiments of the present invention, the flight platform is a helicopter, with a rotating blade rotor.

Furthermore, in accordance with some preferred embodiments of the present invention, the flight platform is a small-scale platform.

Furthermore, in accordance with some preferred embodiments of the present invention, said at least one sensor is fixed to a support passing at least partially within the rotor shaft.

Furthermore, in accordance with some preferred embodiments of the present invention, said sensors are selected from a group of sensors consisting: accelerometers, gyroscope, inclinometers, antennas.

Furthermore, in accordance with some preferred embodiments of the present invention, the antenna comprises a GPS antenna.

Furthermore, in accordance with some preferred embodiments of the present invention, there is provided a method for stabilizing a flight platform comprising a rotor rotating about a rotor shaft for providing the platform with an active driving force, and a flight control system that controls the flight, the method comprising providing at least one of a plurality of sensors located substantially along the axis of rotation of the rotor, for sensing flight parameters and providing the sensed parameters to the flight control.

Furthermore, in accordance with some preferred embodiments of the present invention, the flight platform is an unstable platform.

Furthermore, in accordance with some preferred embodiments of the present invention, the unstable platform is a helicopter, with a rotating blade rotor.

Furthermore, in accordance with some preferred embodiments of the present invention, the unstable platform is a small-scale platform.

Furthermore, in accordance with some preferred embodiments of the present invention, said sensors are located substantially at the zero coordinates of the rotor.

### BRIEF DESCRIPTION OF THE DRAWINGS

In order to better understand the present invention, and appreciate its practical applications, the following Figures are provided and referenced hereafter. It should be noted that the Figures are given as examples only and in no way limit the scope of the invention. Like components are denoted by like reference numerals.

Fig. 1 illustrates an overview of a small scale unstable flight vehicle such as a helicopter.

Fig. 2 illustrates the effect of angular movement of a flight platform on two sensors at different locations.

Fig. 3 illustrates a cross section view of a rotor, in accordance with a preferred embodiment of the present invention.

### DETAILED DESCRIPTION OF PREFERRED EMBODIMENTS

Most fixed wing platforms maintain stability during flight, and keep their flight condition, using minimum pilot correction. On the other hand, unstable platforms, such as rotating wing platforms, cannot keep their stability and flight condition without active piloting. Without active piloting they will roll over immediately. This problem is even more significant in small-scale unstable platforms such as UAP helicopters. The present invention introduces a new method and system for improving the stability of unstable flight platforms, nevertheless it may be used to improve the stability of stable flight platforms as well.

To maintain stability in rotating wing flight platforms, sensors for sensing flight parameters, such as: clinometers, gyros and accelerometers are mechanically installed on the platforms. The sensors will sense all 6 axis movements (X,Y,Z linear and angular), and export these parameters to as inputs to the processing unit, which will use this inputs to stabilize the flight platform by calculating the required outputs values to the system's servos/actuators. To accurately measure the parameters, required for stability and flight control, it is best to locate the sensors as near as possible to the active driving force zero coordinates (X,Y,Z = 0,0,0, which for a helicopter is the point about which the rotor blades are connected and rotate) depending on the platform nature. This will minimize or even eliminate the necessity to filter out irrelevant measurements, as detailed hereinabove in the background section. By "active driving force", in the case of helicopters, it is meant the resultant lift force exerted by the blades.

Persons skilled in the art would alternatively consider the center of mass (C.M) of the flight platform as another good location for the sensors. This is somewhat disadvantageous when dealing with small scale flight platforms, since the inside of the body is usually inaccessible. For larger flight platforms this may indeed be a good place to position the sensors, however since flight control is aimed at controlling and governing the active driving force, placing the sensors substantially along the rotation axis of the active drive force enhances flight control of the flight platform. By flight control is meant, in the context of the present invention, stability control and control of other flight parameters (such as velocity, altitude, angular acceleration and position).

However, in existing unstable flight platforms, as known to the inventor, in most cases, the sensors are not positioned near enough the active driving force (or the center of mass, for that matter), due to technical installation limitations. Thus other irrelevant movements are measured, and need to be eliminated, in whole or partially. Furthermore, in some cases, it is not possible to measure, calculate or to estimate these errors which will require a real error correction to system outputs and will be corrected by the system close loop nature with a reduced system performance. For example, for off-center gyros and clinometers, linear movements, must be filtered out from the sensors output, and for accelerometers the angular movements must be filtered out. This results in reduced control and system performance. The disclosed invention provides a novel solution, which enables locating the sensors at the active driving force zero coordinates (X,Y,Z=0,0,0) or at any other position substantially along the axis of rotation of the source of active driving force (the rotor shaft), thus eliminating the necessity of filtering out irrelevant components from the measured parameters.

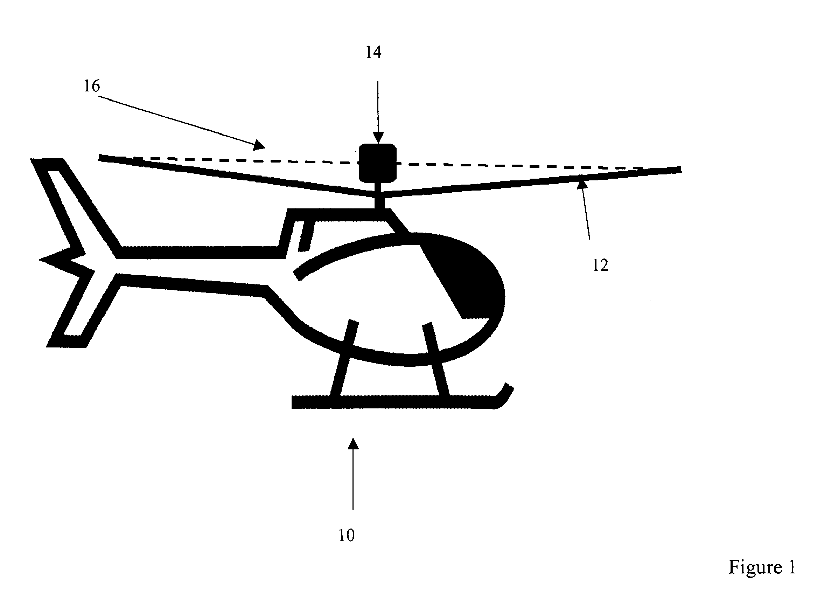

In a preferred embodiment of the invention, in case of a helicopter, the sensors are located at the blade rotating plain center. More specifically, in some preferred embodiments, as shown in figure 1, the sensors (14) of a helicopter (10) are located in the center of the blade rotation plain (16), in a way that they are not in the rotors (12) path.

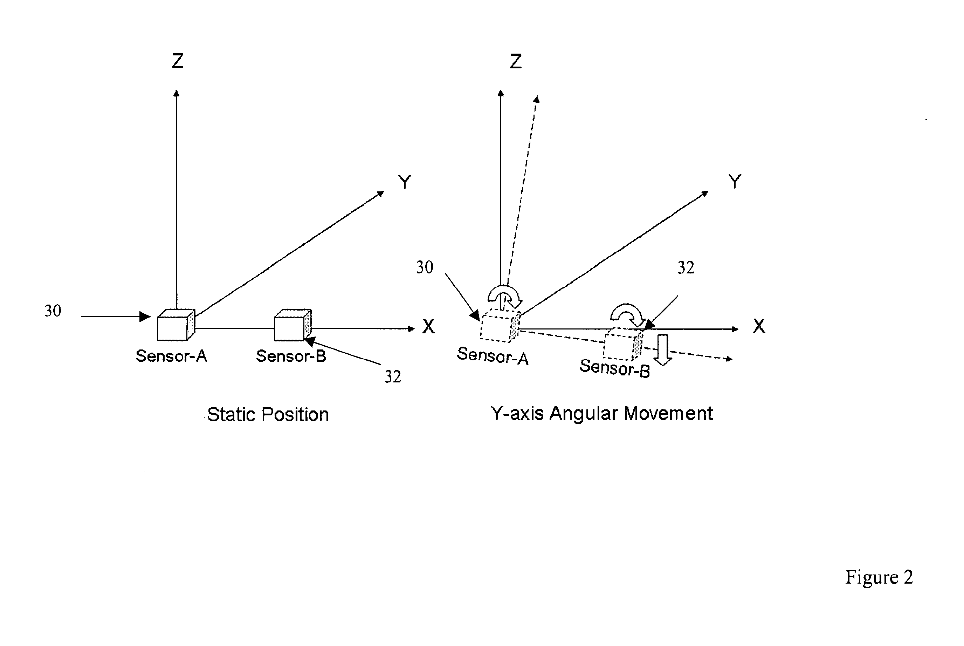

The novel location of the sensors in the center of the blades rotating plain, as illustrated in figure 1, results in measurements, which include only the required values, without additional irrelevant movements and acceleration effect that may cause errors, and require correction efforts in the flight control system. This advantage of the disclosed system is illustrated in figure 2, which shows a flight platform with two sensors "A" (30) and "B" (32). The sensors A and B may be for example a gyro, in two different locations. Sensor element A (30) is located in the blades rotating center plain, while sensor B (32) is located at some distance from the blades rotating center plain. In the initial state, static position, each element measures its angular location correctly. In the next state the flight platform rotates in the Y-Z plane. Sensor A measures only the actual rotation of the flight platform. However sensor B, which is located away from the center, measures both the angular rotation and an additional linear vertical (Z axis) displacement element. Thus to obtain the correct measurement from element B, the linear displacement element must be filtered out from the sensors output. This eventually may reduce the control system performance. Thus the positioning of the sensing elements, in the blades rotating center plain (or center of mass) is advantageous over the standard location, which is off-center.

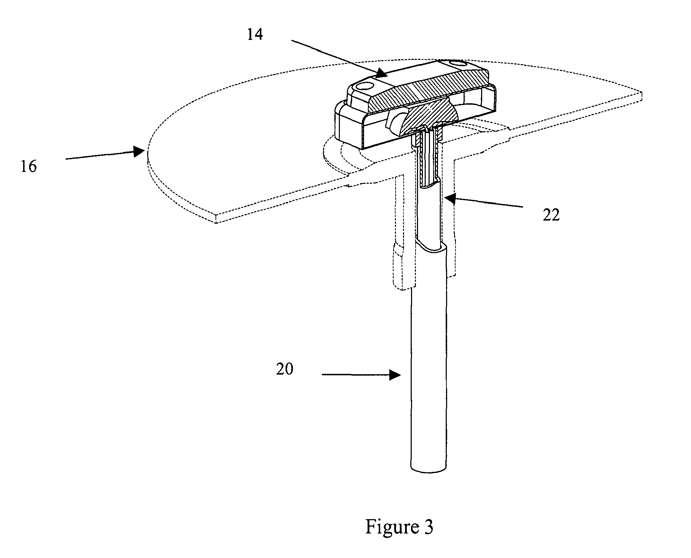

A preferred embodiment, demonstrating installation and positioning of flight control stabilization sensors in the center of the blade rotating plain is illustrated in figure 3. An external main rotating hollow shaft (20) is connected via bearings to an internal fixed hollow shaft (22). The fixed shaft (22) supports the sensors assembly, and encloses the required wires, which are connected to the sensors. This preferred embodiment may be implemented in standard helicopters as well as in small scale unstable flight vehicles such as model helicopter.

Examples of sensors that may be used as inputs to a stabilizing control system of the flight platform are:
a. Dual-axis accelerometers from Analog Devices Corporation, model DXL202.
b. Piezoelectric vibrating gyroscopes from Murata Corporation, model GYROSTAR.
c. Inclinometer from Pewatron Corporation, model UV-2HF-SW2.
However, these are merely examples, and in no way limit the scope of the invention.

In another preferred embodiment, the installation of positioning antennas, such as GPS antennas or others antennas or sensors, is also above the main rotor, substantially along its axis of rotation. This location, which is the highest point in the platform, enables to overcome interference caused mainly by the main rotor, but also by other components that are located above or near the antenna. In addition, when the GPS antennas is located at coordinate (X,Y=0,0), the movements sensed by the GPS system will be related to the platform rotor shaft and will measure purely the helicopter direct movement, while in other cases when the antennas is located at other place than the platform rotor shaft such as the boom tail, irrelevant movements of the boom tail will case a faulty correction by the platform's servos, for example especially during vertical maneuvers such as: takeoff, landing and hovering, where the X,Y movements should be kept equal to zero (X,Y=0,0) and the movement is along Z axes only.

Examples of position inputs that may be used as inputs to the stabilizer control system are:
a. GPS from Novatel Corporation, model PowerPak- OEM3 MILLENIUM STD.
b. Compass and tilt sensors from Advanced Orientation Systems, Inc., model EZ-COMPASS3.
However, these are merely examples, and in no way limit the scope of the invention.

While the present invention is particularly advantageous for non-stable flight platforms, it may also be applied to improve the flight of inherently stable flight platforms. For example, the flight control and stabilization system of the unstable flight platform disclosed in PCT/IL2005/001026 (Filed 26/9/2005), may benefit from implementing the disclosed system and method. PCT/IL2005/001026 discloses a system for autonomous or semi-autonomous flying of a flight platform. The system comprises of a stabilization subsystem, which controls the flight actuators in order to maintain stabilization of the flight platform, and a flight control subsystem, which controls the flight actuators to implement flight control of the flight platform. The two subsystems operate separately but coordinately, wherein the flight control subsystem is overridden by the stabilization subsystem in an event, where the flight platform exceeds a predetermined stabilization threshold, until the flight platform regains stability. By implementing the novel sensor system, as disclosed by applicant in this invention, the system's performance may be improved. More specifically the sensors will provide accurate measurements, without the necessity to correct them or to add additional instrumentation in order to better evaluate the irrelevant values, thus the performance of the stabilization system, will be improved.

It should be clear that the description of the embodiments and attached Figures set forth in this specification serves only for a better understanding of the invention, without limiting its scope as covered by the following Claims.

It should also be clear that a person skilled in the art, after reading the present specification could make adjustments or amendments to the attached Figures and above described embodiments that would still be covered by the following Claims.

## Claims

1. A flight platform, comprising a rotor rotating about a rotor shaft for providing the platform with an active driving force, and a flight control system that controls the flight based on measured flight parameters that are measured by sensors, wherein at least one of the sensors are located substantially along the axis of rotation of the rotor.

2. The flight platform as claimed in Claim 1, wherein said at least one of the sensors is located substantially at the zero coordinates of the rotor.

3. The flight platform as claimed in Claim 1, wherein said at least one of the sensors is located above the zero coordinates of the rotor.

4. The flight platform of claim 1, wherein the flight platform is an unmanned flight platform.

5. The flight platform of claim 1, wherein the flight platform is a helicopter, with a rotating blade rotor.

6. The flight platform of claim 1, wherein the flight platform is a small-scale platform.

7. The flight platform of claim 1, wherein said at least one sensor is fixed to a support passing at least partially within the rotor shaft.

8. The flight platform of claim 1, wherein said sensors are selected from a group of sensors consisting: accelerometers, gyroscope, inclinometers, antennas.

9. The flight platform as claimed in Claim 8, wherein the antenna comprises a GPS antenna.

10. A method for stabilizing a flight platform comprising a rotor rotating about a rotor shaft for providing the platform with an active driving force, and a flight control system that controls the flight, the method comprising providing at least one of a plurality of sensors located substantially along the axis of rotation of the rotor, for sensing flight parameters and providing the sensed parameters to the flight control.

11. The method of claim 10, wherein the flight platform is an unstable platform

12. The method of claim 11, wherein the unstable platform is a helicopter, with a rotating blade rotor.

13. The method of claim 11, wherein the unstable platform is a small-scale platform.

14. The method of claim 11, wherein, said sensors are located substantially at the zero coordinates of the rotor.

15. A flight platform substantially as described in the present specification and accompanying drawings.

16. A method for stabilizing a flight platform substantially as described in the present specification and accompanying drawings.
